**Europäisches Patentamt**

**European Patent Office**

**Office européen des brevets**

(19)

(11) Veröffentlichungsnummer: **0 303 048 B1**

# EUROPÄISCHE PATENTSCHRIFT

(12)

(45) Veröffentlichungstag der Patentschrift:
24.07.91 Patentblatt 91/30

(51) Int. Cl.⁵: **B29C 73/10**

(21) Anmeldenummer: **88110850.0**

(22) Anmeldetag: **07.07.88**

(54) **Reparaturflicken für Gummi-und Kunststoffgegenstände.**

(30) Priorität: **13.08.87 DE 3726991**

(43) Veröffentlichungstag der Anmeldung:
**15.02.89 Patentblatt 89/07**

(45) Bekanntmachung des Hinweises auf die
Patenterteilung:
**24.07.91 Patentblatt 91/30**

(84) Benannte Vertragsstaaten:
**AT BE CH ES FR GB GR IT LI LU NL SE**

(56) Entgegenhaltungen:
**DE-B- 1 008 800**
**US-A- 4 385 651**

(73) Patentinhaber: **STAHLGRUBER Otto Gruber GmbH & Co.**
**Einsteinstrasse 130**
**W-8000 München 80 (DE)**

(72) Erfinder: **Riesinger, Adolf**
**Poinger Strasse 21**
**W-8011 Neufarn (DE)**

(74) Vertreter: **Huss, Carl-Hans, Dipl.-Ing.**
**Patentanwalt Griesstrasse 3 a Postfach 14 54**
**W-8100 Garmisch-Partenkirchen (DE)**

EP 0 303 048 B1

## Beschreibung

Die Erfindung bezieht sich auf einen Reparaturflicken für Gummi- und Kunststoffgegenstände gemäß dem Oberbegriff des Anspruchs 1.

Für die Reparatur von Gummigegenständen aller Art ohne und mit textilen oder textilähnlichen Verstärkungen, z.B. von Reifenschläuchen, Förderbändern, Schlauchbooten, Gummibekleidung, Schwimmtieren oder von gummierten Textilien, beispielsweise Zeltplanen und -böden, Wagenplanen und Persennings und dergleichen sowie von Kunststoffgegenständen, werden sog. "Flicken" gebraucht, die die loch- oder rißförmige Schadensstelle mit einem Hauptkörper überdecken, der mit der Umgebung der Schadensstelle durch eine dünne, an der Unterseite des Hauptkörpers angebrachten Verbindungsschicht verbunden wird. Falls es sich um die Reparatur von Gummigegenständen handelt, besteht der Hauptkörper aus vulkanisiertem Gummi und die Verbindungsschicht aus unvulkanisiertem, vulkanisierbarem Gummi, der nach sachgemäß durchgeführter Reparatur durchvulkanisiert. Die Flicken sind mindestens auf der Unterseite zum Schutze der Verbindungsschicht mit einer z.B. aus Pergamentpapier oder Aluminiumfolie bestehenden Abdeckung versehen, die vor dem Gebrauch des Flickens abgezogen werden muß.

Das Reparaturverfahren ist allgemein bekannt und braucht deshalb nur kurz erläutert zu werden. Der erste Schritt ist die Reinigung der Schadensstelle, der eine mechanische oder mit chemischen Mitteln vorgenommene Aufrauhung folgt. Anschließend wird die Umgebung der Schadensstelle mit einer Klebeflüssigkeit oder -paste oder Vulkanisierlösung eingestrichen und danach der Flicken mit seiner Verbindungsschicht auf die Schadensstelle fest aufgedrückt, z.B. angerollt.

Da der Flicken nach der Erfindung für die Reparatur von Gummigegenständen entwickelt wurde, ist er, obwohl auch für die Reparatur von Kunststoffgegenständen geeignet, nachfolgend in dieser Eigenschaft beschrieben. Bei diesen Flikken werden der unvulkanisierten, vulkanisierbaren Verbindungsschicht die für die Durchvulkanisierung erforderlichen Beschleuniger über die Vulkanisierlösung zugeführt, mit der die Umgebung der Schadensstelle vor dem Aufbringen des Flikkens eingestrichen wird, während sie den ebenfalls erforderlichen Schwefelanteil aus dem zu reparierenden, an der Schadensstelle aufgerauhten Gegenstand herausholt.

Für Schadensstellen normaler Art und Größe werden bevorzugt kreisrunde, gelegentlich auch rechteckige Flicken auf dem Markt angeboten, deren Durchmesser sich nach der Schadensgröße richtet. Mit solchen Flicken lassen sich je nach deren Durchmesser größere Löcher und auch kleinere Risse überbrücken. Für längere Risse sind längliche, an beiden Seiten kreisförmig abgerundete, fälschlich meist "oval" genannte Flicken im Gebrauch, aber teilweise auch Streifen und Bänder auf dem Markt. Es wird jedoch als nachteilig empfunden, daß neben den runden für die meist schmalen Risse unterschiedlicher und teilweise erheblicher Länge, verschiedene Flicken unterschiedlicher Größe für alle Eventualaufgaben bereit gehalten werden müssen.

Der Erfindung lag deshalb die Aufgabe zugrunde, einen Flicken zu schaffen, der Schäden ganz unterschiedlicher Art und Größe mit Flicken einer Grundform zu reparieren erlaubt. Diese Aufgabe löst die Erfindung mit den in den Ansprüchen genannten Mitteln.

Es ist bekannt, z.B. durch die DE-B-10 08 800, den in eine Kante auslaufenden ausgeschärften Rand des Hauptkörpers dergestalt in den überstehenden Rand der Verbindungsschicht einzubetten, daß ringsum längs des gesamten überstehenden Verbindungschichtrandes ein schmaler Teil desselben den Hauptkörper umgreift und somit einen geringen Teil der Oberfläche des Hauptkörperrandes als Verbindungsschichterweiterung abdeckt. Damit läßt sich aber die der Erfindung zugrundeliegende Aufgabe nicht lösen.

Die Erfindung ist anhand der schematischen Zeichnungen nachfolgend beschrieben. Es stellen dar :

| | |
|---|---|
| Fig. 1 | eine Aufsicht auf einen kreisrunden Flicken nach der Erfindung ; |
| Fig. 2 | einen Mittelschnitt durch einen Flicken nach Fig. 1 ; |
| Fig. 3 | die Überbrückung einer längeren Schadensstelle mit Flicken nach der Erfindung in der Aufsicht ; |
| Fig. 4 | eine abgewandelte Ausführungsform eines Flikkens nach der Erfindung ; |
| Fig. 5 und 7 | weiter abgewandelte Ausführungsformen ; |
| Fig. 6 | die Überbrückung einer längeren Schadensstelle mit Flicken nach Fig. 5. |

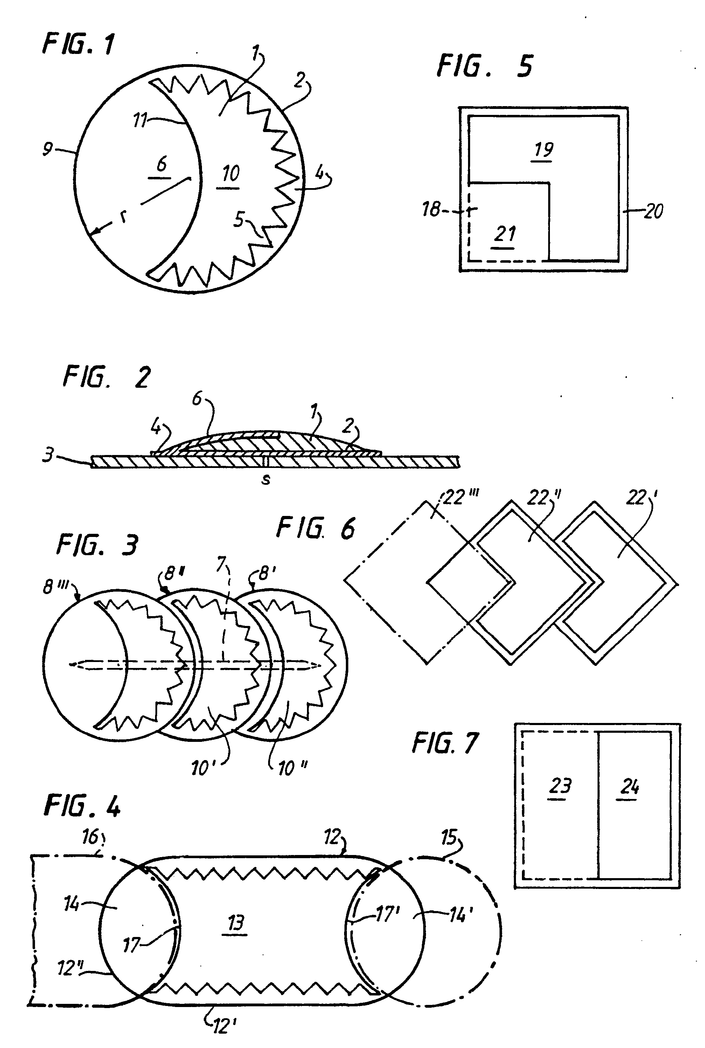

Fig. 2 der Zeichnung zeigt aus zeichnungstechnischen Gründen und zur besseren Darstellung die Größenverhältnisse insofern verzerrt, als ein Flicken des dargestellten Durchmessers nicht so dick ist, d.h. sein Hauptkörper flacher und seine Verbindungsschicht viel dünner.

Hauptteile des Flickens nach der Erfindung sind in bekannter Weise ein die Schadensstelle überbrückender und ihm Festigkeit verleihender Hauptkörper 1 aus vulkanisiertem Gummi und eine dünne Verbindungsschicht 2 an der ebenen, dem zu reparierendem Gegenstand 3 zugewandten Unterseite des Hauptkörpers. Die Verbindungsschicht besteht aus unvulkanisiertem Kautschuk, die aber mit einem über eine Vulkanisierlö-

2

sung zugefügten Beschleuniger und mit aus dem reparierten Gegenstand herausgelösten Schwefel vulkanisierbar ist. Sie überragt in ebenfalls bekannter Weise den Hauptkörper 1 allseitig und bildet so einen überstehenden Rand 4, der die bei gefahrenem Reifen sich auf den Schlauch übertragenden und in Dehnungen und Stauchungen auswirkende Walkbewegungen elastisch aufnimmt und damit ein Einreißen am Rand ebenso wie ein Ablösen der Verbindungsschicht vom Hauptkörper oder repariertem Gegenstand verhindert. Dies wird zusätzlich dadurch unterstützt, daß der Rand des Hauptkörpers in Vorsprüngen oder Zähnen 5 endet, die sich in den Verbindungsschichtrand hinein erstrecken.

Erfindungsgemäß geht die dünne Verbindungsschicht 2 an der Unterseite des Flickens, vom Rand ausgehend, in eine Verbindungsschichterweiterung 6 über, die einen Teil der Oberseite des Hauptkörpers derart abdeckt, daß sie in ihrer Umrissform dem Umriss eines Flikkens gleicher Art entspricht, der auf den Flicken überlappend aufvulkanisiert ist. Der Hauptkörper kann hierzu gemäß Fig. 2 entsprechend abgestuft ausgebildet sein. Dies ermöglicht es, gemäß Fig. 3 zur Abdeckung und Reparatur einer längeren, rißförmigen Schadensstelle 7 mehrere allgemein mit 8', 8", 8''' bezeichnete Flicken, sich teilweise überdeckend, über- und nebeneinander zu setzen. Da, wie schon gesagt, Flicken des in Fig. 2 dargestellten Durchmessers viel dünner als gezeichnet sind, wird durch das teilweise Übereinandersetzen eine kaum merkliche und die Brauchbarkeit des reparierten Gegenstandes nicht verschlechternde Verdickung an der Schadensstelle bewirkt. Bei dieser Art der Reparatur entfällt die Reinigung und das Aufrauhen an den Überlappungsstellen, weil dort die vorher durch Abdeckfolien geschützten Verbindungsschichten aufeinanderstoßen.

Bei dem dargestellten Beispiel haben die Flicken nach den Fig. 1 bis 3 eine kreisrunde Form und die auf die Oberseite des um die Dicke der Verbindungsschicht abgestuften Hauptkörpers 1 übergreifende Verbindungsschicht 6 ist entgegengesetzt zu dem Rand 9, von dem sie ausgeht, so gekrümmt, daß in der Aufsicht ein sichelförmiger Abschnitt 10 des Hauptkörpers verbleibt. Dabei hat die innere Begrenzungslinie 11 der Verbindungsschicht eine Krümmung, die dem Flickenradius r oder etwa demselben entspricht, so daß, wie Fig. 3 veranschaulicht, ein Hauptkörperabschnitt 10' dicht neben dem anderen Hauptkörperabschnitt 10" gesetzt werden kann.

Obwohl die Erfindung konzipiert wurde, um der Vielgestaltigkeit der Flicken zu begegnen, d.h. zum Beispiel lange Flicken entbehrlich zu machen und die Aufgaben, die bisher diese zu lösen hatten, mit einer Mehrzahl runder Flicken zu lösen, kann der Grundgedanke der Erfindung gemäß Fig. 4 auch an einem länglichen Flicken 12 mit einem Hauptkörper 13 und mindestens einer, teilweise sich auch auf die Flickenoberseite erstreckenden Verbindungsschicht verwirklicht werden. Bei dem dargestellten Beispiel sind hierzu Verbindungsschichterweiterungen 14, 14' auf der Flickenoberseite vorgesehen, die an beiden Seiten in zweckmäßig der gleichen Form wie gemäß den Fig. 1 bis 3 angebracht sind. Damit lassen sich längere Schadensstellen überbrücken als dies ein Flicken dieser Größe könnte, wenn man, wie strichpunktiert angedeutet, runde Flicken 15 oder weitere längliche Flicken 16 zur Verlängerung überlappend anbringt.

Natürlich kann die Erfindung auch an anderen Flickenformen, z.B. viereckigen oder quadratischen Flicken verwirklicht werden. Fig. 5 zeigt hierzu in der Aufsicht einen quadratischen Flicken mit einem Hauptkörper 18, dessen auf der Oberseite sichtbarer Teil 19 L-förmig ausgebildet ist und dessen auf der Unterseite angebrachte, einen überstehenden Rand 20 bildende Verbindungsschicht sich auf der Oberseite in einer rechteckigen Verbindungsschichterweiterung 21 fortsetzt. Mehrere Flicken 22', 22" und 22''' können in der in Fig. 6 dargestellten Weise gemäß Fig. 3 über- und nebeneinander zur Überbrückung einer längeren rißförmigen Schadensstelle gesetzt werden. Die auf die Oberseite des Flickens übergreifende Verbindungsschichterweiterung 23 kann gemäß Fig. 7 auch eine rechteckige Form der Größe oder etwa der Größe wie der sichtbare Teil 24 des Hauptkörpers aufweisen.

Für den Fall, daß die Schadensstelle eine entsprechende Form hat, also z.B. von einem Loch nach einer Seite ein Riß ausgeht, können ohne weiteres Flicken verschiedener Größe kombiniert werden, also in diesem Fall z.B. als Beginn einer Flikkenkette ein Flicken größeren Durchmessers gesetzt werden, an den sich beidseitig Flicken geringeren oder abnehmenden Durchmessers anschließen.

## Bezugszeichenaufstellung

| | | |
|---|---|---|
| 1 | Hauptkörper | Fig. 1 bis 3 |
| 2 | Verbindungsschicht | |
| 3 | Reparaturgegenstand | |
| 4 | überstehender Verbindungsschichtrand | |
| 5 | Vorsprünge/Zähne | |
| | | |
| 6 | oberer Teil der Verbindungsschicht | |
| 7 | rißförmige Schadensstelle | |
| 8 | Flicken (allgemein) | |
| 9 | Flickenrand | |
| 10 | sichtbarer Hauptkörperabschnitt | |
| | | |
| 11 | Begrenzungslinie | |
| 12 | länglicher Flicken | Fig. 4 |
| 12' | parallele Seitenkanten | |
| 12" | Flickenränder | |
| 13 | Hauptkörper | |
| | | |
| 14 | obere Verbindungsschichtteile | |
| 15 | angesetzter runder Flicken | |
| 16 | angesetzter länglicher Flicken | |
| 17 | Begrenzungslinien | |
| 18 | Hauptkörper | Fig. 5 |
| | | |
| 19 | sichtbarer Teil Hauptkörper | |
| 20 | überstehender Verbindungsschichtrand | |
| 21 | rechteckiger oberer Verbindungsschichtteil | |
| 22 | Flicken (allgemein) | Fig. 6 |
| 23 | Verbindungsschicht | Fig. 7 |
| | | |
| 24 | sichtbarer Teil Hauptkörper | |
| | | |
| r | Flickenradius | |
| s | Schadensstelle | |

**Patentansprüche**

1. Reparaturflicken für Gummi- und Kunststoffgegenstände, bestehend aus einem die Schadenstelle überbrückenden Hauptkörper (1) und einer, diesen allseitig überragenden, einen überstehenden Rand (4) bildenden Verbindungsschicht (2), die ausgehend vom Rand in eine Verbindungsschichterweiterung übergeht, die einen Teil der Oberseite des Hauptkörpers abdeckt, dadurch **gekennzeichnet**, daß die Verbindungsschichterweiterung in ihrer Umrißform dem Umriß eines Flickens gleicher Art entspricht, der auf den Flicken überlappend aufvulkanisiert ist.

2. Runder Reparaturflicken nach dem Anspruch 1, dadurch **gekennzeichnet**, daß der auf der Flickenoberseite sichtbar bleibende Teil (10) des Hauptkörpers (1) sichelförmig ausgebildet ist.

3. Flicken nach dem Anspruch 2, dadurch **gekennzeichnet**, daß die Verbindungsschichterweiterung (6) weniger als die Hälfte der Oberfläche des Hauptkörpers einnimmt.

4. Flicken nach den Ansprüchen 2 und 3, dadurch **gekennzeichnet**, daß die innere, entgegengesetzt zum Flickenrand (9) gekrümmte Begrenzungslinie (11) der Verbindungsschicherweiterung einem Radius folgt, der dem oder etwa dem Radius (r) des Flickens entspricht.

5. Länglicher Flicken nach dem Anspruch 1 mit parallelen Seitenkanten (12'), dessen Schmalseiten (12") halbkreisförmig ausgebildet sind, **gekennzeichnet** durch mindestens eine Verbindungsschichterweiterung an einem schmalen Flickenende.

6. Flicken nach dem Anspruch 5, dadurch **gekennzeichnet**, daß er an beiden Enden je eine Verbindungsschichterweiterung (14, 14') aufweist.

7. Flicken nach dem Anspruch 5, dadurch **gekennzeichnet**, daß die Begrenzungslinien (17, 17') der Verbindungsschichterweiterungen entgegengesetzt zur Krümmung der Flickenendkanten (12") verlaufen.

8. Rechteckiger Flicken nach dem Anspruch 1, dadurch **gekennzeichnet**, daß der sichtbar bleibende Teil (19) des Hauptkörpers (18) L-förmig ausgebildet ist und die Verbindungsschichterweiterung (21) die Form oder etwa die Form eines Quadrats hat.

9. Rechteckiger Flicken nach dem Anspruch 1, dadurch **gekennzeichnet**, daß der sichtbar bleibende Teil (24) des Hauptkörpers und die Verbindungsschichterweiterung (23) beide die Form eines Rechtecks haben und nebeneinanderliegen.


## Claims

1. Repair patch for rubber and plastics articles, consisting of a main body (1) bridging over the damaged place and a bonding layer (2) projecting beyond the main body all round, forming a projecting margin (4), which layer extends from the margin in a bonding layer extension which covers a part of the upper side of the main body, characterized in that the bonding layer extension corresponds in its outline form to the outline of a patch of the same kind, which is vulcanised on the patch in overlapping manner.

2. Round repair patch according to claim 1, characterized in that the remaining visible part (10) of the main body (1) on the upper side of the patch is crescent shaped.

3. Patch according to claim 2, characterized in that the bonding layer extension (6) occupies less than half of the surface of the main body.

4. Patch according to claims 2 and 3, characterized in that the inner boundary line (11) of the bonding layer extension curved the opposite way to the patch edge (9) follows a radius which corresponds to or approximately to the radius (r) of the patch.

5. Elongated patch according to claim 1 with parallel side edges (12'), whose narrow sides (12") are semi-circularly formed, characterized by at least one bonding layer extension on a narrow patch end.

6. Patch according to claim 5, characterized in that it has a bonding layer extension (14, 14') at each of the two ends.

7. Patch according to claim 5, characterized in that the boundary lines (17, 17') of the bonding layer extensions run with opposite curvature to the patch end edges (12").

8. Rectangular patch according to claim 1, characterized in that the remaining visible part (19) of the main body (18) is L-shaped and the bonding layer extension (21) has the shape or approximately the shape of a square.

9. Rectangular patch according to claim 1, characterized in that the remaining visible part (24) of the main body and the bonding layer extension (23) both have the shape of a rectangle and lie beside each other.


## Revendications

1. Pièce de réparation pour des objets en caoutchouc et en matière plastique, composée d'un corps principal (1) reliant les bords du point défectueux et d'une couche de liaison (2) dépassant de celui-ci de tous côtés et formant un bord dépassant (4), qui se prolonge à partir du bord en une extension de la couche de liaison, qui recouvre une partie de la face supérieure du corps principal, caractérisée en ce que l'extension de la couche de liaison correspond dans son contour au contour d'une pièce de même type, qui est vulcanisée avec recouvrement sur ladite pièce.

2. Pièce de réparation ronde selon la revendication 1, caractérisée en ce que la partie restante (10) du corps principal (1) visible sur la face supérieure de la pièce a une forme de croissant.

3. Pièce selon la revendication 2, caractérisée en ce que l'extension de la couche de liaison (6) représente moins de la moitié de la surface du corps principal.

4. Pièce selon les revendications 2 et 3, caractérisée en ce que la limite intérieure (11) de l'extension de la couche de liaison de courbure inverse au bord de la pièce (9) a un rayon qui est égal ou sensiblement égal au rayon (r) de la pièce.

5. Pièce allongée selon la revendication 1, comportant des bords latéraux (12') parallèles, dont les petits côtés (12") ont une forme de demi-cercle, caractérisée par au moins une extension de la couche de liaison à une extrémité étroite de la pièce.

6. Pièce selon la revendication 5, caractérisée en ce qu'elle comporte aux deux extrémités une extension de la couche de liaison (14, 14').

7. Pièce selon la revendication 5, caractérisée en ce que les limites (17, 17') des extensions de la couche de liaison ont une courbure inverse à la courbure des bords terminaux des pièces (12').

8. Pièce rectangulaire selon la revendication 1, caractérisée en ce que la partie visible (19) restante du corps principal (18) a une forme de L et le prolongement de la couche de liaison (21) a la forme ou sensiblement la forme d'un carré.

9. Pièce rectangulaire selon la revendication 1, caractérisée en ce que la partie visible (24) restante du corps principal et l'extension de la couche de liaison (23) ont toutes deux la forme d'un rectangle et sont disposées côte à côte.

FIG. 1

FIG. 5

FIG. 2

FIG. 3

FIG. 6

FIG. 4

FIG. 7

7